# EUROPÄISCHE PATENTANMELDUNG

(11) **EP 2 487 455 A1**
(43) Veröffentlichungstag der Anmeldung: **15.08.2012**
(21) Anmeldenummer: 11154211.4
(22) Anmeldetag: 11.02.2011
(51) Int. Cl.: G01B 17/02, G01B 21/02

(54) **Messvorrichtung**

(71) Anmelder: SIEMENS AKTIENGESELLSCHAFT, 80333 München (DE)
(72) Erfinder: Jahnke, Ronny, 14612 Falkensee (DE); Sczepurek, Tristan, 13129 Berlin (DE)

(57) **Zusammenfassung**

Die Erfindung betrifft eine Messvorrichtung (10) mit einem Ultraschallmesskopf (20), wobei die Messvorrichtung (10) einen mit dem Ultraschallmesskopf (20) gekoppelten Weg- oder Kraftsensor (24) aufweist.

## Beschreibung

Die vorliegende Erfindung betrifft eine Messvorrichtung mit einem Ultraschallmesskopf; eine Messvorrichtungsanordnung mit mehreren solcher Messvorrichtungen, die in einer vorbestimmten Relation zueinander angeordnet sind; und ein Messsystem mit einer solchen Messvorrichtung und/oder Messanordnung, einer Datenverarbeitungseinrichtung und wenigstens einem relativ zu einem Bauteil ausrichtbaren Messvorrichtungs- und/oder Messanordnungsträger. Ferner betrifft die vorliegende Erfindung ein Verfahren zur Überprüfung der Fertigungstoleranzen von Bauteilen unter Verwendung eines derartigen Messsystems.

Messsysteme der eingangs genannten Art sind im Stand der Technik in unterschiedlichen Ausgestaltungen bekannt. Sie werden beispielsweise dazu eingesetzt, die Wandstärken von Bauteilen im ein- oder ausgebauten Zustand mittels Ultraschall zu messen. Auf diese Weise kann zum Beispiel die Einhaltung von vorab definierten Fertigungstoleranzen überprüft werden.

Die Ultraschallmessung ist ein zerstörungsfreies akustisches Messverfahren, das bei schallleitfähigen Werkstoffen eingesetzt werden kann, wozu auch die meisten Metalle gehören. Zur punktuellen Überprüfung der Wandstärke eines Bauteils werden normalerweise in einem ersten Schritt mehrere Messstellen unter Verwendung einer Schablone manuell auf dem zu überprüfenden Bauteil markiert. Anschließend wird wahlweise das Bauteil im Bereich der gekennzeichneten Messstellen oder der Ultraschallmesskopf mit einem Koppelmittel benetzt, um die vom Ultraschallmesskopf ausgesendeten Ultraschallwellen ordnungsgemäß auf das zu überprüfende Bauteil übertragen zu können. Als Koppelmittel kann beispielsweise Gel, Wasser oder Öl verwendet werden. Alternativ kann eine Trockenankopplung ohne jegliches Koppelmittel erfolgen. In sich anschließenden Schritten wird der Ultraschallmesskopf manuell der Reihe nach auf die markierten Messstellen aufgesetzt, wobei die bei den einzelnen Messungen erfassten Sensordaten an ein Datenverarbeitungssystem übermittelt werden. Innerhalb des Datenverarbeitungssystems erfolgt dann die Auswertung und Aufbereitung der Sensordaten. Auch ist es bekannt, Ultraschallmessungen zeitgleich an mehreren Messstellen vorzunehmen. Hierzu werden normalerweise Messanordnungen eingesetzt, bei denen mehrere Messvorrichtungen der eingangs genannten Art zu so genannten Arrays mit vorbestimmter relativer Ausrichtung zusammengefasst sind.

Soll zusätzlich zur Bauteilwandstärke die äußere Bauteilgeometrie überprüft werden, so kommen neben einem Ultraschallmesskopf Weg- und/oder Kraftsensoren zum Einsatz. Derartige Weg- und Kraftsensoren sind meist Bestandteil eines Koordinatenmesssystems. Hierbei handelt es sich um eine serielle Kinematikmaschine mit einem den Weg- oder Kraftsensor aufnehmenden und dreidimensional verfahrbaren Sensorträger. Der Weg- oder Kraftsensor umfasst meist einen Messtaster bestehend aus einem flexibel gelagerten dünnen Stab, an dessen zum überprüfenden Bauteil weisenden axialen Ende eine gehärte Rubinkugel angeordnet ist. Das andere axiale Ende des Stabes ist in einem Grundkörper gehalten, der einen Stator aufweist. Zusammen mit dem Stator bilden beide Bauteile einen induktiven Wegsensor, dessen Induktivität sich durch das Eintauchen des Stabes in den Stator ändert, wenn die Rubinkugel beim Anfahren einer Messstelle die Oberfläche des Bauteils berührt. Die verfahrbaren Achsen werden in der Regel elektrisch mit Schrittmotoren über eine computerisierte numerische Steuerung, kurz CNC, betrieben. Dabei ist in allen verfahrbaren Achsen ein Längenmesssystem integriert, das inkremental oder absolut, üblicherweise optisch, die Verfahrlänge der jeweiligen Achse über Zählung oder Auslesung von Markierungen ermittelt und an ein Datenverarbeitungssystem meldet. Dieses erzeugt daraus dann die kartesischen Koordinaten (X, Y, Z) der angefahrenen Messstellen.

Ein wesentlicher Nachteil bei der gemeinsamen Überprüfung der Wandstärke und der äußeren geometrischen Abmessungen eines Bauteils besteht darin, dass die Wandstärken- und Geometriemessungen nacheinander durchgeführt werden müssen, was sehr zeitaufwendig und entsprechend teuer ist.

Ausgehend von diesem Stand der Technik ist es eine Aufgabe der vorliegenden Erfindung, ein Messsystem der eingangs genannten Art mit alternativem Aufbau zu schaffen, das die Wandstärke und die äußere Geometrie eines Bauteils zeitgleich in einem Messschritt erfasst.

Zur Lösung dieser Aufgabe schafft die vorliegende Erfindung eine Messvorrichtung der eingangs genannten Art, die dadurch gekennzeichnet ist, dass die Messvorrichtung einen mit dem Ultraschallmesskopf gekoppelten Weg- oder Kraftsensor aufweist. Mit anderen Worten wird eine kombinierte Messvorrichtung bereitgestellt, die das zeitgleiche Erfassen der Wandstärke und einer äußeren geometrischen Abmessung eines Bauteils in einem einzigen Messschritt ermöglicht. Sobald der Ultraschallmesskopf auf die Oberfläche eines Bauteils aufgesetzt wird, kann neben der mittels Ultraschall ermittelten Wandstärke über den Weg- oder Kraftsensor simultan auch ein Koordinatenmesspunkt der äußeren Bauteilgeometrie erfasst werden. Hierdurch werden der für die Durchführung der Messungen erforderliche Zeitaufwand und die damit einhergehenden Kosten stark reduziert. Insbesondere ein Wechsel der Messvorrichtung entfällt.

Bevorzugt ist wenigstens eine Datenschnittstelle zur Übertragung von Sensorsignalen des Ultraschall- und/oder des Weg- oder Kraftsensors vorgesehen. Dies ermöglicht eine direkte Übertragung der erfassten Sensorsignale an eine zur Weiterverarbeitung dieser Signale ausgelegte Datenverarbeitungseinrichtung.

Vorteilhaft ist der Ultraschallmesskopf lösbar an dem Wegoder Kraftsensor angeordnet. Entsprechend kann in Abhängigkeit von dem zu messenden Bauteil stets ein Ultraschallkopf benötigter Größe eingesetzt werden.

Um einen möglichst wartungsfreien Weg- oder Kraftsensor mit einem einfachen Aufbau bereitzustellen, der zudem gute Messergebnisse erzielt, ist der Weg- oder Kraftsensor gemäß einer erfindungsgemäßen Ausgestaltung als induktiver, kapazitiver oder optischer Weg- oder Kraftsensor ausgebildet.

Gemäß einem weiteren Aspekt der vorliegenden Erfindung ist ein Federmittel vorgesehen, das den Ultraschallmesskopf in eine vorbestimmte Position vorspannt. Durch die federbelastete Ankopplung des Ultraschallmesskopfes an das Bauteil wird eine Beschädigung des Bauteils und der Messvorrichtung verhindert. Darüber hinaus ist der Anpressdruck einstellbar. Zudem wird der Ultraschallmesskopf im unbelasteten Zustand stets in eine vorbestimmte Ausgangsposition vorgespannt.

Zur Lösung der eingangs genannten Aufgabe schafft die vorliegende Erfindung ferner eine auch als Array bezeichnete Messvorrichtungsanordnung mit mehreren der zuvor beschriebenen Messvorrichtungen, die in einer vorbestimmten Relation zueinander angeordnet sind. Dies ermöglicht ein zeitgleiches Durchführen von mehreren Messungen an verschiedenen definierten Messstellen. Mit anderen Worten werden gleichzeitig mehrere Bauteilwandstärken und mehrere Raumkoordinaten der äußeren Bauteilgeometrie erfasst. Der Einsatz einer solchen Messvorrichtungsanordnung geht mit noch geringeren Messdauern einher und bietet sich insbesondere dann an, wenn hohe Stückzahlen größerer Bauteile hergestellt werden.

Gemäß einem weiteren Aspekt schafft die vorliegende Erfindung ein Messsystem mit einer Messvorrichtung und/oder einer Messvorrichtungsanordnung nach einem der vorhergehenden Ansprüche, einer Datenverarbeitungseinrichtung und wenigstens einem relativ zu einem Bauteil ausrichtbaren Messvorrichtungs- und/oder Messanordnungsträger, der insbesondere an einem dreidimensional verfahrbaren Schlitten oder Roboterarm angeordnet ist. Bei dem Messsystem kann es sich beispielsweise um ein entsprechend modifiziertes Koordinatenmesssystem der eingangs beschriebenen Art handeln.

Darüber hinaus schafft die vorliegende Erfindung ein Verfahren zur Überprüfung der Fertigungstoleranzen von Bauteilen unter Verwendung eines Messsystems der zuvor beschriebenen Art, bei dem eine Wandstärke und eine Oberflächenkoordinate des Bauteils an zumindest einer definierten Messstelle in einem einzigen Messschritt zeitgleich erfasst werden.

In einer Ausführungsform wird/werden die wenigstens eine Messstelle des Bauteils und/oder der wenigstens eine Ultraschallmesskopf vor dem Erfassen der Wandstärke und der Oberflächenkoordinate des Bauteils mit einem Koppelmittel benetzt.

Hinsichtlich weiterer vorteilhafter Ausgestaltungen der Erfindung wird auf die Unteransprüche sowie auf die nachfolgende Beschreibung eines Ausführungsbeispiels unter Bezugnahme auf die beiliegende Zeichnung verwiesen. In der Zeichnung zeigt
Figur 1 eine schematische Ansicht einer Messvorrichtung gemäß einer Ausführungsform der vorliegenden Erfindung;
Figur 2 eine schematische Ansicht eines Messsystems gemäß einer Ausführungsform der vorliegenden Erfindung, das die in Figur 1 dargestellte Messvorrichtung aufweist; und
Figur 3 eine schematische Ansicht einer

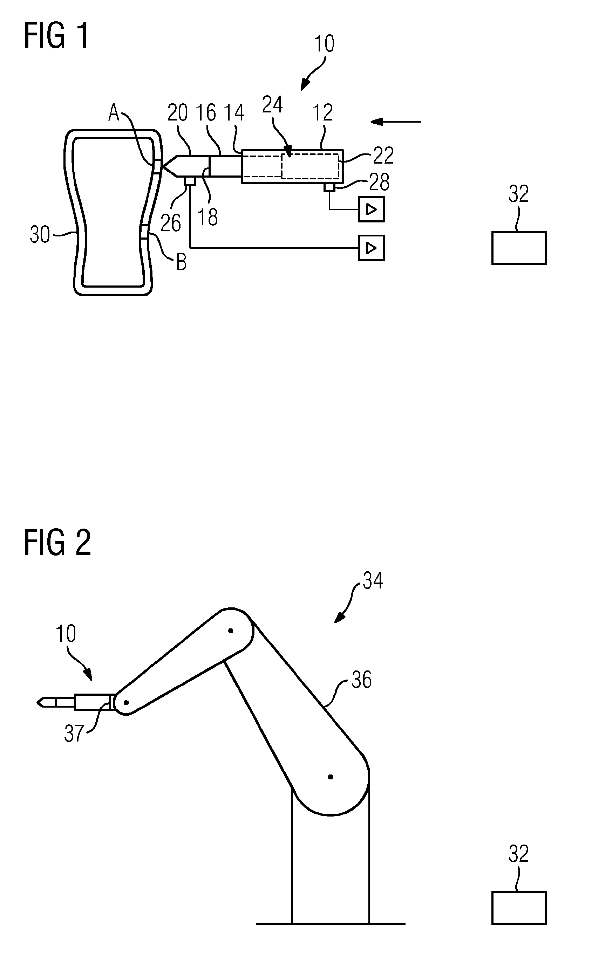

Messvorrichtungsanordnung gemäß einer Ausführungsform der vorliegenden Erfindung, das mehrere der in Figur 1 dargestellte Messvorrichtungen aufweist.

Gleiche Bezugsziffern beziehen sich nachfolgend auf gleiche oder gleichartig ausgebildete Komponenten.

Figur 1 zeigt schematisch eine Messvorrichtung 10 mit einem stabförmigen Grundkörper 12, der an seiner Vorderseite 14 mit einer Öffnung versehen ist, in die axial bewegbar ein Messstab 16 eingesetzt ist. An einem von dem Grundkörper 12 nach außen vorstehenden Ende 18 des Messstabes 16 ist ein Ultraschallmesskopf 20 lösbar angeordnet. Dieser wird über eine in den Grundkörper 12 eingesetzte, nicht näher dargestellte Feder, die sich innerhalb des Grundkörpers 12 an dem Grundkörper 12 einerseits und an dem Messstabes 16 andererseits abstützt, in eine definierte Ausgangsposition vorgespannt. Ein innerhalb des Grundkörpers 12 liegendes Ende des Messstabs 16 taucht in einen vorliegend gestrichelt dargestellten Stator 22 ein und bildet mit diesem einen induktiven Wegsensor 24. An dem Ultraschallkopf 20 und an dem Grundkörper 12 sind Datenschnittstellen 26 und 28 ausgebildet, um Ultraschall- und Wegsensorsignale zu übertragen.

Zur Überprüfung der Fertigungstoleranzen des Bauteils 30 an der Messstelle A wird die Messstelle A mit einem Koppelmittel, wie beispielsweise Öl, benetzt. Alternativ kann eine Trockenankopplung ohne jegliches Koppelmittel erfolgen. Anschließend wird die Messvorrichtung 10 durch nicht näher dargestellte Mittel automatisch aus seiner Nullstellung zur Messstelle A des Bauteils 30 bewegt. Sobald der Ultraschallmesskopf 20 die Oberfläche des Bauteils 30 berührt, ändert sich durch den in den Stator 22 eintauchenden Messstab 16 die Induktivität des Wegsensors 24. Die Verfahrlänge der jeweiligen Achsen wird ermittelt und über die Schnittstelle 28 an ein Datenverarbeitungssystem 32 gemeldet. Hieraus erzeugt dieses die kartesischen Koordinaten (X, Y, Z) der Messstelle A. Zeitgleich wird der Ultraschallmesskopf 20 aktiviert und misst die Wandstärke des Bauteils 30 an der Messstelle A. Dieser Vorgang ist stets reproduzierbar und an weiteren Messstellen des Bauteils 30 wiederholbar, wie beispielsweise an der Messstelle B. Hierzu wird die Messvorrichtung 10 in einem sich anschließenden Schritt an die Messstelle B bewegt, woraufhin erneut die zuvor beschriebenen Messungen durchgeführt werden.

Figur 2 zeigt schematisch ein Messsystem 34 gemäß einer Ausführungsform der vorliegenden Erfindung, bei dem die zuvor beschriebenen Mittel zum Bewegen der Messvorrichtung 10 durch einen Roboterarm 36 gebildet werden. Die Messvorrichtung 10 ist dabei über einen Messvorrichtungsträger 37 am freien Ende des Roboterarms 36 gehalten. Über den in drei Koordinatenrichtungen verfahrbaren Roboterarm 36 lassen sich die vorab programmierten Messstellen A und B an der Oberfläche des Bauteils 30 automatisch anfahren.

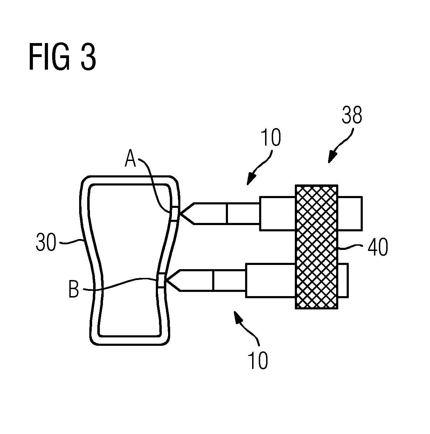

Figur 3 zeigt schematisch eine Messvorrichtungsanordnung 38 gemäß einer Ausführungsform der vorliegenden Erfindung. Die Messvorrichtungsanordnung 38 besteht aus zwei der in Figur 1 dargestellten Messvorrichtungen 10. Ferner ist ein Messvorrichtungsanordnungsträger 40 vorgesehen, der die beiden Messvorrichtungen 10 in einer vorbestimmten Relation zueinander hält, die auf das zu messende Bauteil 30 abgestimmt ist. Genauer gesagt werden die Messvorrichtungen 10 derart von dem Messanordnungsträger 40 gehalten, dass in einem einzelnen Messschritt die Messstelle A des Bauteils 30 von der einen Messvorrichtung 10 und die Messstelle B des Bauteils 30 von der anderen Messvorrichtung 10 der Messvorrichtungsanordnung 38 angefahren werden kann.

Entsprechend muss die Messvorrichtungsanordnung 38 nur ein einziges Mal an das Bauteil 30 geführt werden, um die Wandstärken und die Koordinaten der jeweiligen Messstellen A und B zu erfassen, wie es in Figur 3 angedeutet ist. Auf diese Weise kann die Messdauer auf ein Minimum reduziert werden. Es sollte klar sein, dass auch die Messvorrichtungsanordnung 38 über den Messvorrichtungsanordnungsträger 40 an dem in Figur 2 gezeigten Roboterarm 36 befestigt werden kann.

## Patentansprüche

1. Messvorrichtung (10) mit einem Ultraschallmesskopf (20), **dadurch gekennzeichnet, dass** die Messvorrichtung (10) einen mit dem Ultraschallmesskopf (20) gekoppelten Weg- oder Kraftsensor (24) aufweist.

2. Messvorrichtung (10) nach Anspruch 1,
**dadurch gekennzeichnet, dass**
wenigstens eine Datenschnittstelle (26, 28) zur Übertragung von Sensorsignalen des Ultraschallmesskopfes (20) und/oder des Weg- oder Kraftsensors (24) vorgesehen ist.

3. Messvorrichtung (10) nach Anspruch 1 oder 2,
**dadurch gekennzeichnet, dass**
der Ultraschallmesskopf (20) lösbar an dem Weg- oder Kraftsensor (24) angeordnet ist.

4. Messvorrichtung (10) nach einem der vorherigen Ansprüche,
**dadurch gekennzeichnet, dass**
der Weg- oder Kraftsensor (24) als induktiver, kapazitiver oder optischer Weg- oder Kraftsensor ausgebildet ist.

5. Messvorrichtung (10) nach einem der vorhergehenden Ansprüche,
**dadurch gekennzeichnet, dass**
ein Federmittel vorgesehen ist, das den Ultraschallmesskopf (20) in eine vorbestimmte Position vorspannt.

6. Messvorrichtungsanordnung (38) mit mehreren Messvorrichtungen (10) nach einem der vorherigen Ansprüche, die in einer vorbestimmten Relation zueinander angeordnet sind.

7. Messsystem (34) mit einer Messvorrichtung (10) und/oder einer Messvorrichtungsanordnung (38) nach einem der vorhergehenden Ansprüche, einer Datenverarbeitungseinrichtung (32) und wenigstens einem relativ zu einem Bauteil (30) ausrichtbaren Messvorrichtungs- und/oder Messvorrichtungsanordnungsträger (37; 40), der insbesondere an einem dreidimensional verfahrbaren Schlitten oder Roboterarm (36) angeordnet ist.

8. Verfahren zur Überprüfung der Fertigungstoleranzen von Bauteilen (30) unter Verwendung eines Messsystems (34) nach Anspruch 7, bei dem eine Wandstärke und eine Oberflächenkoordinate des Bauteils (30) an zumindest einer definierten Messstelle (A, B) in einem einzigen Messschritt zeitgleich erfasst werden.

9. Verfahren nach Anspruch 8, **dadurch gekennzeichnet, dass** die wenigstens eine Messstelle (A, B) des Bauteils (30) und/oder der wenigstens eine Ultraschallmesskopf (20) vor dem Erfassen der Wandstärke und der Oberflächenkoordinate des Bauteils (30) mit einem Koppelmittel benetzt wird/werden.
